# EUROPÄISCHE PATENTSCHRIFT

(11) **EP 1 603 763 B1**
(45) Veröffentlichungstag und Bekanntmachung des Hinweises auf die Patenterteilung: **28.10.2009**
(21) Anmeldenummer: 04710022.7
(22) Anmeldetag: 11.02.2004
(51) Int. Cl.: B60J 10/00, B60J 10/02

(54) **DICHTUNGSLEISTE FÜR EINE FAHRZEUGRAHMENSTRUKTUR**
SEALING STRIP FOR A VEHICLE FRAME STRUCTURE
BAGUETTE D'ETANCHEITE POUR UNE STRUCTURE DE CHASSIS DE VEHICULE

(30) Priorität: 18.03.2003 DE 20304270 U
(43) Veröffentlichungstag der Anmeldung: 14.12.2005
(73) Patentinhaber: Meteor Gummiwerke K.H. Bädje GmbH & Co. KG, 31167 Bockenem (DE)
(72) Erfinder: MATTHIES, Ingolf, 38707 Altenau (DE)
(74) Vertreter: Sobisch, Peter
(86) Internationale Anmeldenummer: PCT/EP2004/001251
(87) Internationale Veröffentlichungsnummer: WO 2004/082974

(56) Entgegenhaltungen:
- EP-A- 0 258 599
- EP-A- 0 628 439
- EP-A- 0 642 943
- WO-A-98/21061
- DE-A- 10 061 817
- DE-B- 1 215 009
- US-A- 4 119 325
- US-A- 5 461 830

## Beschreibung

Die Erfindung bezieht sich auf eine Dichtungsleiste entsprechend dem Oberbegriff des Anspruchs 1.

Derartige Dichtungsleisten finden Anwendung im C-Säulenbereich von Fahrzeugstrukturen, jedoch auch im Bereich der Dachrahmen von Filtverdecken, Hardtops und zurückziehbaren Hardtops. In allen Fällen ist eine zwischen einer Öffnungs**-** und einer Schließstellung bewegbare, insbesondere verschwenkbare Scheibe vorhanden, die im Schließzustand mit den Dichtungselementen dieser Dichtungsleiste in Eingriff steht, wobei dieser Eingriff im Öffnungszustand gelöst ist und wobei nach Maßgabe der Öffnungs- bzw. Schwenkstellung der Scheibe ein teilweiser Eingriff gegeben ist.

Aus der EP 0 628 439 A1 ist eine vergleichbare Dichtungsleiste für eine Rahmenstrukur bekannt. Der Grundkörper dieser Dichtungsleiste besteht aus zwei, unabhängig voneinander hergestellten, im zusammengesetzten Zustand eine U-förmige Struktur beschreibenden L-förmigen Formteilen, die aus thermoplastischem Elastomer bestehen können. An den jeweils freien Enden dieser Struktur sind einwärts ragende Dichtlippen angeformt, die zur beidseitigen Anlage an einer Scheibe einer Kraftfahrzeugtür bestimmt sind. Eine Verbindung der beiden Formteile wird dadurch erreicht, dass deren, den Dichtlippen abgekehrte Enden jeweils nach Art einer Feder-Nut-Verbindung ausgestaltet und dementsprechend ineinander steckbar sind. Letztgenannter Zustand kann durch Anwendung von Klebstoffen oder durch Verschweißung zusätzlich gesichert sein. Diese Dichtungsleiste ist zur Aufnahme in einem im Querschnitt U-förmigen Rahmenprofil des Kraftfahrzeugs bestimmt, welches dementsprechend eine seitliche Stützwirkung ausübt. Eine solche Dichtleiste ist zur Verwendung bei einer ebenen Türstruktur bestimmt, deren Scheibe zwischen einer Öffnungs**-** und einer Schließstellung geradlinig verschiebbar ist.

Eine im Wesentlichen vergleichbare Dichtungsleiste, die aus einem Kunststoff besteht und die im Rahmen einer Feder-Nut-Verbindung der L-förmigen Formteile zusätzlich verrastet ist, ist aus der US 5,461,830 bekannt

Bei der konstruktiven Auslegung der Schwenkbewegung der Scheibe müssen in Abhängigkeit von der jeweiligen Fahrzeugkonstruktion häufig jedoch geometrische Beschränkungen beachtet werden, die durch den Radkasten bedingt sind, der den zur Aufnahme der Scheibe im völligen Öffnungszustand verfügbaren Raum innerhalb der Türkonstruktion einschränkt. In vielen Fällen ist somit die Einrichtung einer vergleichsweise komplizierten Schwenkbewegung der Scheibe erforderlich, ein Umstand, der bei der Bemessung der Dichtungsleisten beachtet werden muss. Regelmäßig sind derartige Dichtungsleisten derart ausgebildet, dass sie als Träger zweier Dichtungslippen dienen, welche zum beidseitigen dichtenden Überdecken von Randbereichen der Scheibe bestimmt sind, wobei der flächige bzw. räumliche Verlauf der Dichtungsleiste an die Schwenkbewegung der Scheibe anzupassen ist, um eine im Dichtungsbereich gleichmäßig Überdeckung mit den Dichtungslippen zu erreichen.

Die zur Fahrzeugmontage bereite Dichtungsleiste ist im Gegensatz zu dem eingangs vorgestellten Stand der Technik somit ein in Abhängigkeit von dem konkreten Einsatzfall flächig oder räumlich gekrümmtes, zwei Dichtungslippen tragendes Bauteil.

Es ist im Hause der Anmelderin bekannt, dieses Bauteil einstückig auszubilden, wobei zwischen einer Gründstruktur und den Dichtungslippen unterschieden wird, die sich werkstofflich unterscheiden und wobei zur Verbesserung der Dichteigenschaften und zur Verminderung des Verschleißes die mit der Scheibe in Wechselwirkung tretenden Flächenabschnitte der Dichtungslippen beispielsweise mit Gleitlack beschichtet werden. Weitere Oberflächenbearbeitungen können in diversen Beflockungsverfahren usw. bestehen. Nachdem sich die zu bearbeitenden Flächen häufig an schwer zugänglichen Stellen der Dichtungsleiste befinden und regelmäßig ein elastisches Verformen zwecks Offenlegung der zu bearbeitenden Flächen notwendig ist, gestalten sich diese Arbeitsgänge insbesondere aufgrund der räumlich gekrümmten Gestalt der Dichtungsleiste in Verbindung mit der entlang dieser nicht konstanten Breitenabmessungen häufig schwierig. Die schlechte Zugänglichkeit der Funktionsflächen kann in Einzelfällen zu Qualitätsminderungen bei der Bearbeitung und zu Mängeln bei den Enderzeugnissen führen.

Eine einstückige Ausbildung einer Dichtungsleiste ist beispielsweise aus der bereits genannten EP 0 642 943 A1 bekannt.

Es ist vor diesem Hintergrund die Aufgabe der Erfindung, eine Dichtungsleiste der eingangs bezeichneten Art zu entwerfen, welche unter Vermeidung der dem Stand der Technik anhaftenden Nachteile bei hoher Passgenauigkeit insbesondere montagemäßig einfach handhabbar ist und unter Anpassung an die jeweilige Scheibenverschwenkungskurve beliebige Eindringtiefen zwischen Scheibe und Dichtungsleiste nach Maßgabe variabler Überdeckungen der Dichtungsflächen der Scheibe ermöglicht, wobei ferner Arbeitsprozesse im Bereich von Funktionsflächen vereinfacht werden sollen. Gelöst ist diese Aufgabe bei einer solchen Dichtungsleiste durch die Merkmale des Kennzeichnungsteils des Anspruchs 1.

Die erfindungsgemäße Dichtungsleiste besteht aus zwei voneinander getrennten Formteilen, die miteinander verbindbar sind und sich gleichförmig von dem einem bis zu dem anderen Ende erstrecken. Beide Formteile können vor dem Zusammensetzen fertig bearbeitet werden, insbesondere im Bereich ihrer Funktionsflächen und es werden diese erst im Endzustand zwecks Bildung der komplettierten Dichtungsleiste miteinander verbunden. Die Formteile können bei diesem Aufbau unter besonderer Berücksichtigung von Belangen der Fertigungstechnik angelegt sein, welches insbesondere die Funktionsflächen betrifft, die einer Nachbearbeitung bedürfen, beispielsweise durch Beschichtung oder in sonstiger Weise. Diese Nachbearbeitungen können somit unbehindert durch die Struktur der komplettierten Dichtungsleiste erfolgen und zwar unabhängig von der flächigen oder räumlichen Krümmung des Formteils, welches durch die konkrete Fahrzeugrahmenkonstruktion sowie die Scheibenschwenkkurve bedingt ist. Es steht somit eine Dichtungsleiste zur Verfügung, welche aufgrund ihres konstruktiven Aufbaus frei von Bearbeitungsfehlem ist und sich durch eine qualitativ einwandfreie Bearbeitung ihrer Funktionsflächen auszeichnet.

Die Dichtungsleiste weist eine im Querschnitt U-förmige Gestaltung auf, wobei an den freien Enden dieser U-förmigen Struktur Dichtungslippen angesetzt sind und wobei der durch diese Struktur umgebene Hohlraum zur Aufnahme der Scheibe während deren Schwenkbewegung ausgehend von der Schließ- in die Öffnungsstellung bestimmt ist. Dieser Hohlraum weist eine durch die Schwenkkurve der Scheibe bedingte, sich in Längsrichtung der Dichtungsleiste ändernde Gestalt auf und ermöglicht insbesondere unterschiedliche Eindringtiefen der Scheibe ausgehend von dem einem bis zu dem anderen Ende der Dichtungsleiste. Schließlich ist dieser Hohlraum auch flächig und/oder räumlich gekrümmt, und zwar wiederum nach Maßgabe der jeweiligen Fahrzeugkonstruktion. Diese Grundstruktur verdeutlicht zugleich die Schwierigkeit, die ansonsten bei der Bearbeitung von Funktionsflächen innerhalb dieser Struktur bestehen würde. Als derartige Funktionsflächen sind insbesondere solche anzusehen, die in unmittelbarer Berührung mit Randbereichen der in diese Struktur während der genannten Schwenkbewegung eingeführten Scheibe treten.

Die U-förmige Gestalt der Dichtungsleiste ist erfindungsgemäß aus global L-förmigen Formteilen zusammengesetzt, die aus einem Montagabschnitt einerseits und aus einem Seitenabschnitt andererseits bestehen, wobei an den freien Enden der Montageabschnitte Dichtungselemente angesetzt sind, welche die Dichtungslippen tragen. Während das Formteil aus einem Kunststoff besteht, ist das jeweilige Dichtungsetement aus einem Elastomerwerkstoff hergestellt. Beide Formteile lassen sich über ihre Montageabschnitte zu einer im Querschnitt rechteckigen oder auch quadratischen Gestalt zusammensetzen, wodurch die im Querschnitt U-förmige Struktur der Dichtungsleiste gebildet wird. Die einander im Montagezustand überdeckenden Formteile sind erfindungsgemäß über ihre Montageabschnitte formschlüssig aneinander befestigt, wobei zur Herbeiführung des Befestigungszustands lediglich ein Eingriff der Profilelemente des einen Montageabschnitts mit den Ausnehmungen des anderen Montageabschnitts herbeizuführen ist, welches über eine Verschiebebewegung herbeiführbar ist und wobei der endgültige Montagezustand reibschlüssig oder auch durch ein mechanisches Verrasten gesichert sein kann. Die erfindungsgemäße Dichtungsleiste gelangt in diesem Zustand zur Montage, bei welchem die Formteile aneinander befestigt sind. Es ist somit ein einheitlich handhabbares Bauelement

Die Dichtungslippen weisen entsprechend den Merkmalen des Anspruchs 3 eine bogenförmige Gestalt auf und erstrecken sich ausgehend von den freien Enden der U-förmigen Struktur einwärts bezüglich des durch diese umgrenzten Hohlraumes. Vorzugsweise berühren sich die Dichtungslippen bei herausgeschwenkter Scheibe innerhalb dieses Hohlraumes. Dies bedeutet, dass die Dichtungslippen bei eingeschwenkter Scheibe infolge eines Anliegens an dieser elastisch verschwenkt werden, womit in Abhängigkeit von dem Ausmaß der Verschwenkung eine elastische Anpresskraft aufgebracht wird. Durch entsprechende Oberflächenbeschichtung der Dichtungslippen können insbesondere deren Gleiteigenschaften verbessert und ein auftretender Verschleiß sowie Reibungskräfte gegenüber der Scheibe vermindert werden. Die elastische Rückstellkraft der Dichtungslippen kann durch die Wahl des Werkstoffs, jedoch auch durch örtliche Querschnittsschwächungen, Einkerbungen oder dergleichen konstruktiv beeinflusst werden.

Die Merkmale der Ansprüche 4 bis 6 sind auf beispielhafte werkstoffliche Ausgestaltungen der Dichtungsleiste gerichtet. Die Formteile können hiemach beispielsweise aus einem glasfaserverstärkten PPE bestehen, wobei die Stellen, die zum Anspritzen von Dichtungselementen bestimmt sind, die aus beispielsweise EPDM bestehen können, mit SBR beschichtet sind. Sämtliche dieser Teile werden vorzugsweise durch Extrudieren, Spritzgießen bzw. Spritzpressen verarbeitet, somit im Wesentlichen im Rahmen kontinuierlicher Fertigungsverfahren, wobei Funktionsflächen einer Nachbearbeitung, insbesondere Beschichtung unterzogen werden. Die werkstofflichen Angaben sind jedoch lediglich beispielhaft und nicht im Sinne einer Beschränkung auf diese zu verstehen. Beispielsweise können ein PPE mit einem Glasfaseranteil von 20 % und ein EPDM mit einer Shore A Härte von 50 verwendet werden.

Funktionsflächen der Dichtungsleiste sind entsprechend den Merkmalen des Anspruchs 7 beispielsweise mit Gleitlack überzogen oder beflockt.

Die-Montageabschnitte beider Formteile sind entsprechend den Merkmalen des Anspruchs 8 dazu bestimmt, dass sie im montierten Zustand im Oberflächenbereich mit formschlüssig wirksamen Verriegelungselementen ausgerüstet sind, die beim Zusammenbau in Eingriff gebracht werden. Die konkrete Gestaltung dieser Verriegelungselemente kann grundsätzlich beliebig vorgenommen werden, soweit eine zuverlässige Verbindung, insbesondere auch Verrastung gegeben ist

Man erkennt, dass die erfindungsgemäße Dichtungsleiste ein insbesondere mit Hinblick auf Belange der Fertigung hin ausgestaltetes Produkt ist, welches angepasste Überdeckungen im Dichtungsbereich nach Maßgabe der Schwenkposition einer Scheibe ermöglicht, und zwar unter Anpassung an beliebige flächige oder räumliche Krümmungen, die durch die jeweilige Fahrzeugrahmenkonstruktion bedingt sind, so dass entsprechend dem Schwenkwinkel der Scheibe variable Eindringtiefen derselben in die Struktur der Dichtungsleiste ermöglicht werden.

Die Erfindung wird im Folgenden unter Bezugnahme auf das in den Zeichnungen schematisch dargestellte Ausführungsbeispiel näher erläutert werden. Es zeigen

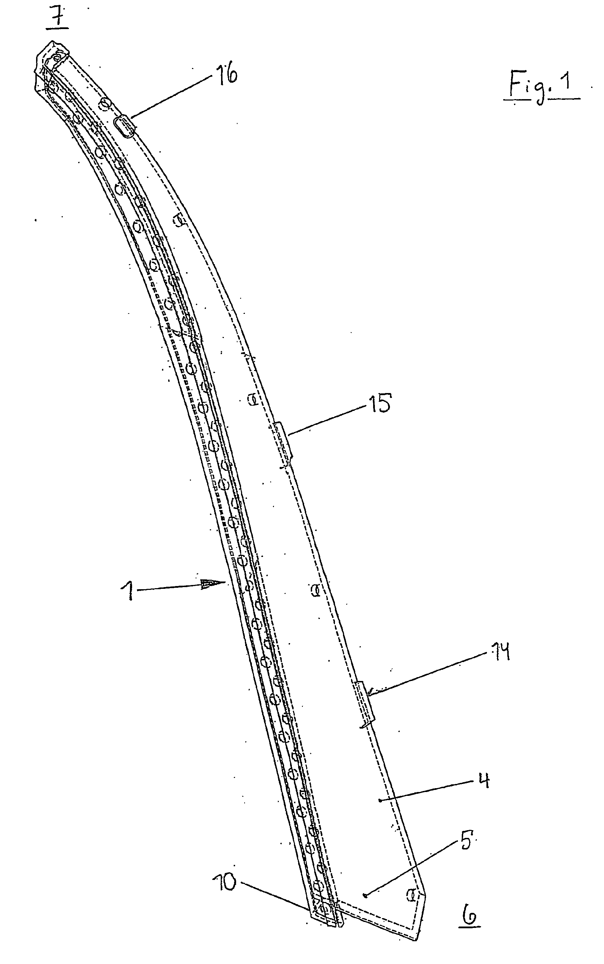

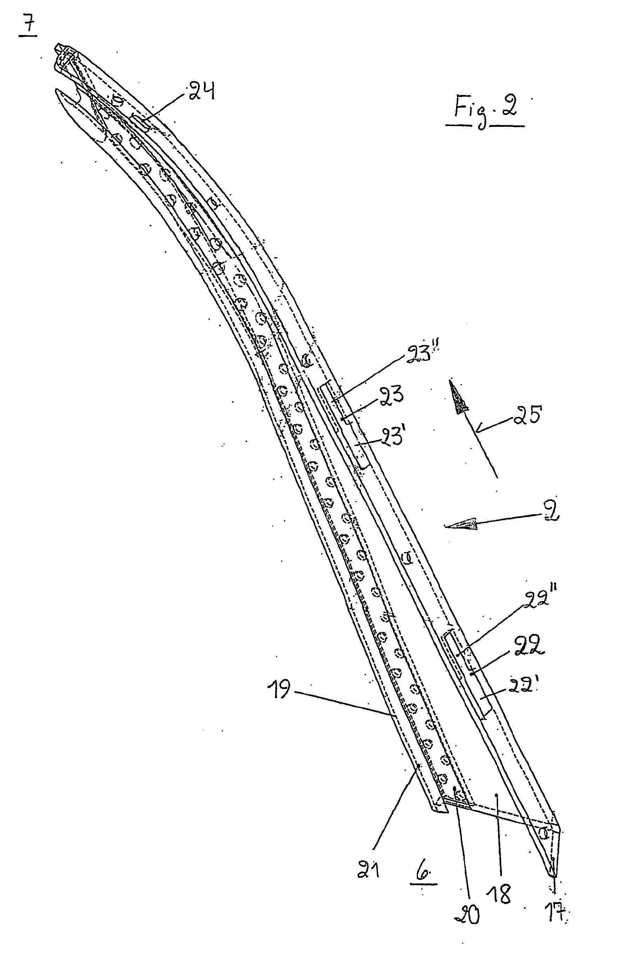

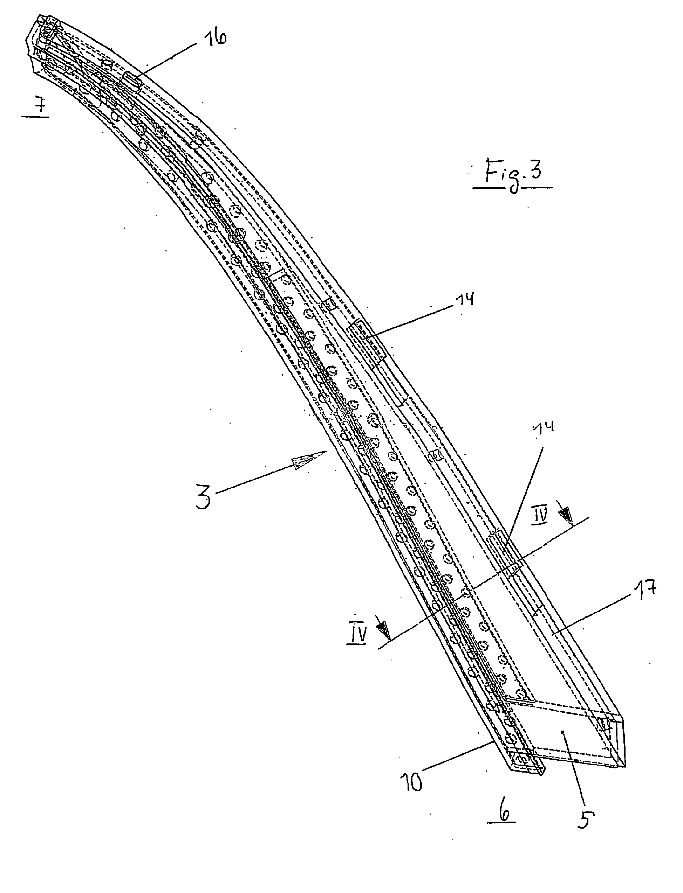

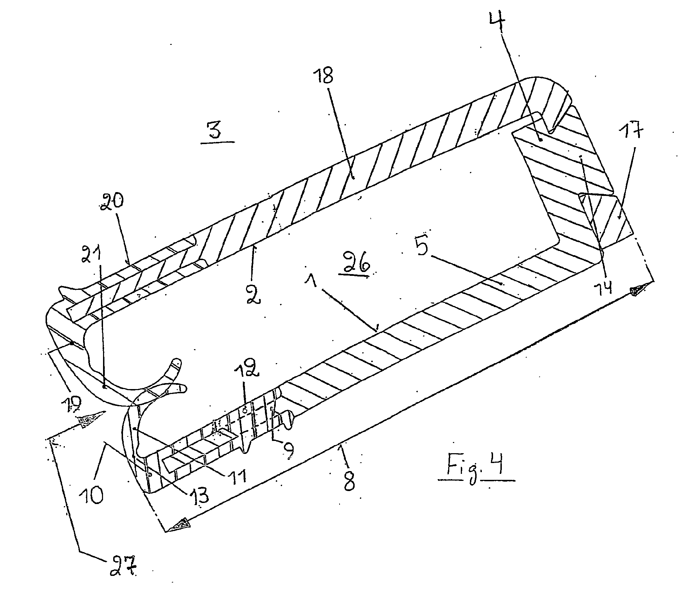

Fig. 1 und 2 jeweils perspektivische Darstellungen der im Rahmen der erfindungsgemäßen Dichtungsleiste miteinander zusammenwirkenden und aufeinander abgestimmten Formteile.

## Patentansprüche

1. Zur Montage an einer Fahrzeugrahmenstruktur eingerichtete Dichtungsleiste (3), die zum Zusammenwirken mit einer zwischen einer Öffnungs- und einer schließstellung verschwenkbaren Scheibe eines Fensters bestimmt ist, mit einem, eine langgestreckte, im Querschnitt U-förmige, einen Hohlraum (26) im Wesentlichen umschließende Struktur aufweisenden Grundkörper, wobei an den freien Enden dieser Struktur jeweils eine Dichtungslippe (11,21) mit der Maßgabe angeordnet ist, dass die während einer Schwenkbewegung randseitig in den Hohlraum (26) eingeführte Scheibe beidseitig mit einer Dichtungslippe in Anlage tritt, mit zwei, getrennt voneinander hergestellten, miteinander in Verbindung bringbaren, im verbundenen Zustand den Grundkörper der Dichtungsleiste (3) bildenden Formteilen (1,2) wobei beide Formteile aus einem Kunststoff bestehen, eine global L-förmige Gestalt aufweisen und jeweils aus einem Montageabschnitt (4,17) und einem sich zu diesem vorzugsweise senkrecht erstreckenden Seitenabschnitt (5,18) bestehen, dass im montierten Zustand die Formteile (1,2) sich im Bereich ihrer Montageabschnitte (4,17) überdecken, **dadurch gekennzeichnet, dass** der Grundkörper eine in Abhängigkeit von der Fahrzeugrahmenstruktur flächig oder räumlich gekrümmte Gestaltung aufweist, dass der Hohlraum (26) ausgehend von dem einen Ende (6) bis zu dem anderen Ende (7) hin eine sich ändernde, insbesondere vermindernde Tiefe entsprechend einem Breitenmaß (8) aufweist, dass an dem Montageabschnitt (4) Profilelemente (14,16) angeformt sind, die zur formschlüssigen Befestigung der Formteile aneinander mit Ausnehmungen (22,23) des Montageabschnitts (17) in Eingriff bringbar sind und dass an jedem freien Ende der Seitenabschnitte (5,18) der Formteile (1,2) ein eine Dichtungslippe (11,21) tragendes, aus einem Elastomer hergestelltes Dichtungselement (10,19) befestigt ist.

2. Dichtungsleiste (3) nach Anspruch 1, **dadurch gekennzeichnet, dass** zumindest eines der Formteile (1,2) eine zu beschichtende oder in sonstiger Weise zu bearbeitende Funktionsfläche aufweist und dass sich die Funktionsfläche innerhalb der U-förmigen Struktur des Hohlraumes (26) befindet.

3. Dichtungsleiste (3) nach Anspruch 1 oder 2, **dadurch gekennzeichnet, dass** die Dichtungslippen (11.21) eine bogenförmige Gestaltung aufweisen und sich innerhalb des Hohlraumes (26) bei herausgeschwenkter Scheibe vorzugsweise berühren.

4. Dichtungsleiste (3) nach einem der vorangegangenen Ansprüche 1 bis 3, **dadurch gekennzeichnet, dass** die Formteile (1,2) aus einem faserverstärkten PPE [Poly(oxy-(2,6-dimethyl)-1.4-phenylen)] bestehen.

5. Dichtungsleiste (3) nach einem der vorangegangenen Ansprüche 1 bis 4, **dadurch gekennzeichnet, dass** die Dichtungselemente (10,19) aus EPDM (Ethylen/Propylen-Dien-Copolymerisat),TPE (thermoplastisches Elastomer) oder dergleichen bestehen.

6. Dichtungsleiste nach einem der Ansprüche 1 bis 6, **dadurch gekennzeichnet, dass** zumindest die Bereiche der Formteile (1,2), die bei einem Herstellen der Dichtungselemente (10,19) durch Umspritzen mit diesen Dichtungselementen in Wechselwirkung treten, mit SBR (Styrol-Butadien-Kautschuk) oder einem vergleichbaren Stoff beschichtet sind.

7. Dichtungsleiste (3) nach einem der vorangegangenen Ansprüche 2 bis 6, **dadurch gekennzeichnet, dass** die genannten Funktionsflächen mit Gleitlack überzogen, beflockt oder in sonstiger Weise im Oberflächenbereich bear-beitet sind.

8. Dichtungsleiste (3) nach einem der vorangegangenen Ansprüche 1 bis 7, **dadurch gekennzeichnet, dass** im montierten Zustand die Formteile (1,2) über formschlüssig wirksame, in diesen Abschnitten gebildete Verriegelungselemente miteinander in Verbindung stehen.

## Claims

1. Sealing strip (3) which is arranged for mounting on a vehicle frame structure and which is intended to cooperate with a window pane which can be pivoted between an open and a closed position, having a basic body which comprises an elongated structure which has a U-shaped cross-section and substantially surrounds a hollow space (26), wherein a sealing lip (11, 21) is arranged in each case at the free ends of this structure with the proviso that the pane which is introduced on the edge-side into the hollow space (26) during the pivoting movement comes into abutment on both sides with a sealing lip, having two molded parts (1, 2) which are produced separately from one another, can be connected together and in the connected state form the basic body of the sealing strip (3), wherein both molded parts consist of a synthetic material, comprise a generally L-shaped configuration and consist in each case of a mounting portion (4, 17) and a side portion (5, 18) which extends preferably perpendicular thereto, that in the mounted state the molded parts (1,2) overlap each other in the region of their mounting portions (4,17),
**characterized in**
**that** the basic body is two-dimensionally or three-dimensionally curved in dependence upon the vehicle frame structure,
**that** starting from one end (6) towards the other end (7), the hollow space (26) comprises a changing, in particular a reducing depth corresponding to a width dimension (8),
**that** profile elements (14, 16) are formed at the mounting portion (4), which profile elements may be brought into engagement with cut-outs (22,23) of the mounting portion (17) in order to attach the molded parts to each other in a positive-locking manner,
and **that** a sealing element (10,19) which supports a sealing lip (11,21) and is produced from an elastomer is attached at each free end of the side portions (5, 18) of the molded parts (1,2).

2. Sealing strip (3) as claimed in claim 1, **characterized in that** at least one of the molded parts (1, 2) comprises a functional surface which is to be coated or processed in another manner and that the said functional surface is located within the U-shaped structure of the hollow space (26).

3. Sealing strip (3) as claimed in claim 1 or 2, **characterized in that** the sealing lips (11, 21) comprise an arcuate configuration and preferably contact one another within the hollow space (26) when the pane is pivoted out.

4. Sealing strip (3) as claimed in any one of the preceding claims 1 to 3, **characterized in that** the molded parts (1, 2) consist of a fiber-reinforced PPE [poly(oxy-(2,6-dimethyl)-1,4-phenylene)].

5. Sealing strip (3) as claimed in any one of the preceding claims 1 to 4, **characterized in that** the sealing elements (10, 19) consist of EPDM (ethylene/propylene-diene-copolymer), TPE (thermoplastic elastomer) or the like.

6. Sealing strip (3) as claimed in any one of claims 1 to 6, **characterized in that** at least the regions of the molded parts (1, 2) which during production of the sealing elements (10, 19) by injection-molding interact with these sealing elements, are coated with SBR (styrene-butadiene-rubber) or a comparable substance.

7. Sealing strip (3) as claimed in any one of the preceding claims 2 to 6, **characterized in that** the said functional surfaces are coated with an antifriction varnish, are flocked or are processed in another way in the surface region.

8. Sealing strip (3) as claimed in any one of the preceding claims 1 to 7, **characterized in that** in the mounted state the molded parts (1, 2) are connected to each other via locking elements which act in a positive locking manner and which are formed in these portions.

## Revendications

1. Listeau d'étanchéité (3) installé pour le montage sur une structure de châssis de véhicule et qui est destiné à coopérer avec une vitre de fenêtre pouvant pivoter entre une position d'ouverture et une position de fermeture, avec un corps de base présentant une structure allongée en forme de U en coupe transversale et entourant sensiblement un espace creux (26), dans lequel on aménage, aux extrémités libres de cette structure, respectivement une lèvre d'étanchéité (11, 21), à condition que la vitre introduite par le bord dans l'espace creux (26) pendant un mouvement pivotant prenne appui des deux côtés avec une lèvre d'étanchéité, avec deux pièces moulées (1,2) fabriquées séparément l'une de l'autre, pouvant être reliées l'une à l'autre et formant à l'état lié le corps de base du listeau d'étanchéité (3), dans lequel les deux pièces moulées sont constituées d'un matériau synthétique, présentent une forme globalement en L et sont constituées, respectivement, d'une section de montage (4,17) et d'une section latérale (5, 18) s'étendant de préférence perpendiculairement à celle-ci, et qu'à l'état monté, les pièces moulées (1, 2) se recouvrent dans la zone de leurs sections de montage (4, 17), **caractérisé en ce que** le corps de bas présente une conception incurvée dans un plan ou dans l'espace en fonction de la structure de châssis de véhicule, **en ce que** l'espace creux (26) présente, depuis l'une des extrémités (6) jusqu'à l'autre extrémité (7), une profondeur variable, en particulier qui se réduit en fonction d'une mesure de largeur (8), **en ce que** des éléments profilés (14,16) sont moulés sur la section de montage (4), lesquels éléments profilés (14,16) peuvent être mis en prise avec des évidements (22, 23) de la section de montage (17) pour la fixation à complémentarité de forme des pièces moulées l'une avec l'autre et **en ce qu'**un élément d'étanchéité (10,19) portant une lèvre d'étanchéité (11, 21) et fabriqué en élastomère est fixé à chaque extrémité libre des sections latérales (5, 18) des pièces moulées (1, 2).

2. Listeau d'étanchéité (3) selon la revendication 1, **caractérisé en ce qu'**au moins une des pièces moulées (1, 2) présente une surface fonctionnelle à revêtir ou à traiter autrement et **en ce que** la surface fonctionnelle se trouve au sein de la structure en forme de U de l'espace creux (26).

3. Listeau d'étanchéité (3) selon la revendication 1 ou 2, **caractérisé en ce que** les lèvres d'étanchéité (11,21) présentent une conformation en arc et se touchent de préférence dans l'espace creux (26) lorsque la vitre est écartée par pivotement.

4. Listeau d'étanchéité (3) selon l'une quelconque des revendications 1 à 3 précédentes, **caractérisé en ce que** les pièces moulées (1, 2) sont constituées d'un PPE [poly(oxy-(2,6-dimélhyl)-1,4-phénylène)] renforcé par des fibres.

5. Listeau d'étanchéité (3) selon l'une quelconque des revendications précédentes 1 à 4, **caractérisé en ce que** les éléments d'étanchéité (10, 19) sont constitués d'EPDM (copolymère d'éthylène/propylène-diène), de TPE (élastomère thermoplastique) ou similaire.

6. Listeau d'étanchéité selon l'une quelconque des revendications 1 à 6, **caractérisé en ce qu'**au moins les zones des pièces moulées (1, 2), qui entrent en interaction lors d'une fabrication des éléments d'étanchéité (10, 19) par enrobage par extrusion avec ces éléments d'étanchéité, sont revêtus de SBR (caoutchouc de styrène-butadiène) ou d'une substance comparable.

7. Listeau d'étanchéité (3) selon l'une quelconque des revendications précédentes 2 à 6, **caractérisé en ce que** les surfaces fonctionnelles citées sont recouvertes d'un vernis de glissement, floquées ou autrement traitées dans la zone de surface.

8. Listeau d'étanchéité (3) selon l'une quelconque des revendications 1 à 7 précédentes, **caractérisé en ce qu'**à l'état monté, les pièces moulées (1, 2) communiquent entre elles par le biais d'éléments de verrouillage efficaces par complémentarité de formes façonnés dans ces sections.
